# EUROPEAN PATENT SPECIFICATION

(11) **EP 2 016 248 B1**
(45) Date of publication and mention of the grant of the patent: **05.05.2010**
(21) Application number: 07734241.8
(22) Date of filing: 28.03.2007
(51) Int. Cl.: E05F 5/10, F16F 9/00

(54) **FLUID DAMPER**
FLUIDDÄMPFER
AMORTISSEUR À FLUIDE

(30) Priority: 05.05.2006 MY 0602082
(43) Date of publication of application: 21.01.2009
(73) Proprietor: Harn Marketing Sdn. Bhd., 30100 Ipoh, Perak (MY)
(72) Inventor: LAM, Harn Lian, 30250 Ipoh, Perak (MY); LAM, Harn, Yan, 30250 Ipoh, Perak (MY)
(74) Representative: Tönhardt, Marion
(86) International application number: PCT/IB2007/000922
(87) International publication number: WO 2007/129157

(56) References cited:
- DE-U1- 20 010 282
- DE-U1- 20 302 120
- US-A- 3 424 448
- US-A1- 2004 182 662

## Description

The invention relates to a fluid damper for use in applications such as articles of furniture that have moveable components, for example a drawer or a wardrobe door. The damper serves to prevent the moveable components from shutting with excessive force that would otherwise damage the components and generate undesired noise. A damper according to the preamble of claim 1 is disclosed in document US 2004/0182662 A1.

### DESCRIPTION OF THE PRIOR ART

A moveable component of an article of furniture such as a desk drawer, or a wardrobe door generates undesirable noise when it slams shut with excessive force. Also the excessive closing force may ultimately damage the furniture article. It is, therefore, desirable to provide a damping mechanism that allows for the shutting of moveable furniture components in a quiet and undamaging manner. Previously, this has been accomplished by installing a totally sealed device having a piston to resist the motion of door shutting, but such devices are difficult to adjust in a predictable and controllable way. Subsequently, a damper assembly having a cylinder adapted to receive a piston having a piston rod with a bush or piston ring acting to close one end of the cylinder was provided. The piston ring is made of a resiliently deformable material which flattens under compressive force and is pressed against the cylinder inner wall to provide frictional force during the inward stoke of the piston. However, the disadvantage of this damper assembly is that the piston ring is highly prone to frictional wear and tear.

Following that, hydraulic or fluid dampers were provided. A hydraulic or fluid damper normally has a cylindrical housing within which a piston is moveable in a linear fashion. The same piston is attached to a form of mechanism for providing resistive force or bearing, on the piston. The mechanism is usually a cylindrical block or a disc, which spans across the entire cross section of the cylinder with slight spatial allowance between the inner wall of the housing and the peripheral surface of the mechanism. The interior space of the housing is filled with a viscous fluid, so when the mechanism moves within the interior space, it experiences some degree of drag owing to its obstruction against fluid flow from one side of mechanism to another. Fluid dampers are less susceptible to wear and tear since the inner wall of the cylinder is lubricated with the damping fluid that also induces the drag force for the mechanism.

Such a fluid damper is disclosed in two German utility models, namely, DE 20302120U and DE 20302121 U. Both the fluid dampers of '2120 and '2121 comprise a cylinder with an open and closed end. Disposed within the cylinder is a piston having a piston rod, guide casing for the piston rod, retaining piece, guide part connectable to retaining piece via a pin, and a spring. The piston, piston rod, retaining piece and guide part form a single unit that is adjustable within the cylinder. The spring is anchored at the closed end of the cylinder and connected to the piston rod via the guide part. The open end of the cylinder is closed with a removeable cap when in use. The guide casing is axially located within the cylinder such that one longitudinal end is contacting the cylinder cap and the other longitudinal end is contacting the retaining piece.

Also, as can be seen from the above-described configuration of both '2120 and '2121, the two bearing points for the piston rod are firstly, at the longitudinal end of the guide casing that contacts the cylinder cap and secondly, at the guidance part. The position of the second bearing point is not fixed stationary but is moveable with its position changing depending on the movement of the piston part. In other words, as the piston rod is driven or moved in and out of the cylinder, the second bearing point rubs against the inner wall of the cylinder, inevitably leading to frictional wear and tear of the cylinder inner wall as well as the second bearing point.

In '2120, a deformable fluid absorbent coat having a longitudinal slit is provided. This coat encompasses the central portion of the guide casing and lowers the counter-pressure within the cylinder so that a smaller force is required when depressing the piston rod of the fluid damper. When the piston rod is depressed, the coat is deformed or squeezed by the displaced damping fluid and when the piston rod is pulled out from the cylinder, fluid pressure surrounding the coat is relieved and the coat returns to a non-deformed relaxed state. The only fluid passages provided for the displacement of the damping fluid between the closed end of the cylinder and the open end of the cylinder when the piston rod is depressed, are slight gaps between the cylinder inner wall, and outer walls of a longitudinal end of the guide casing-retaining piece-guide part unit. This is undesirable as this arrangement results in raising the counter-pressure within the cylinder and therefore, negates the action of the fluid absorbent coat in lowering the cylinder counter-pressure.

Also, in '2121, a seal for preventing tilting of the piston rod is provided between the two bearing points of the piston rod, and more specifically the seal is located within the longitudinal end of the guide casing that contacts the retaining piece. The location of this seal would inevitably result in a high rate of wear and tear and ultimately, physical deterioration of the seal due to friction between the piston rod and the seal as the rod is driven in and out of the cylinder.

It would therefore be desirable to have a fluid damper that solves the above problems.

This invention thus aims to alleviate some or all of the problems of the prior art, and to provide a fluid damper that is robust, easily assembled and manufactured without compromising the damping performance.

### SUMMARY OF THE INVENTION

In accordance with the invention, there is provided a fluid damper for use in applications such as furniture, as defined by claim 1.

In an embodiment, the guide bushing is fixed in its axial position within the cylinder and is located toward the open end of the cylinder. The flange portions are suitably disc-shaped and have a plurality of fluid passages.

According an embodiment, each of the flange portions has a plurality of fluid passages.

According to another embodiment, just one of the flange portions has a plurality of fluid passages.

In an embodiment, the fluid passages comprise apertures that are distributed about the flange portion.

In a further embodiment, the fluid passages comprise alternatively or additionally openings about the periphery of the flange portion.

Also, in an embodiment of this further aspect, elastic material may be located in the space between the guide bushing central shaft and the cylinder wall. The elastic material preferably comprises multiple pieces that are tubular in shape and surround the guide bushing central shaft. The multiple pieces of the elastic material may be aligned axially relative to one another on the shaft such that adjacent ones of the elastic material abut one another in a relaxed state. The elastic material should preferably be a fluid-porous material. In an embodiment, three such pieces of elastic material are provided.

According to the invention, the guide bushing comprises an assembly of two parts that are connectable in the central shaft.

According to another embodiment, the guide bushing is made of a hard material and preferably a hard plastic material. An example of such material is polyethylene, polyfluoroethylene and polypropylene.

In yet another embodiment, a resilient means, such as a spring, is provided between the piston and the closed end of the cylinder.

In a further embodiment, the inner wall of the cylinder comprises a constricting step for axially locating the guide bushing.

The guide bushing may then be located such that one longitudinal end of the guide bushing is in contact with the seal and the other longitudinal end is in contact with the constricting step.

The objective of the fluid damper of this invention is to provide a fluid damper having parts that are easily assembled and manufactured without compromising on the durability or performance of the damper.

The multiple pieces of elastic material that are individually compressible by the damping fluid, result in smaller counter-pressure in the cylinder when the piston rod is depressed in comparison with the singular piece of coat provided in the prior fluid damper of '2120. This is because multiple pieces of elastic material equate to a significantly larger surface area for action of the damping fluid compression force, making it easier for the damping fluid to compress the multiple pieces of elastic material, thus smaller counter-pressure.

The plurality of fluid passages provided on the disc-shaped flanges of the guide bushing would allow for easy displacement of the damping fluid from the cylinder closed end to the open end when the piston rod is depressed. Consequently, the counter-pressure within the cylinder is lowered. Together with the above-described action of the multiple pieces of individually compressible elastic material, the counter-pressure within the cylinder would be advantageously significantly lowered.

Also, as is apparent from the above description, the two bearing surfaces for the piston rod are at each longitudinal end (disc-shaped flange) of the guide bushing. Due to the configuration and location of the guide bushing, the guide bushing is held stationary during the movement of the piston rod. Therefore, the position of both the first and second bearing surfaces is fixed and will not be affected by the movement of the piston rod. The fixed nature of the bearing surfaces (guide bushing flanges) advantageously results in no frictional rubbing of the bearings against the inner wall of the cylinder, thus prolonging the life of the cylinder. This advantage pertains whether or not elastic material is disposed on the guide bushing. Thus in some embodiments, the elastic material can be omitted.

Additionally, the guide bushing of the fluid damper of this invention is made of a hard material and therefore will not be damaged by the frictional rubbing motion between the inner wall of the disc-shaped flanges (bearing surfaces) and the piston rod.

Forming the guide bushing as a two-part or multi-part assembly further simplifies installing the elastic material or pieces thereof.

Furthermore, the simple configuration of the components of the fluid damper of this invention results in an easily manufactured and assembled fluid damper.

### BRIEF DESCRIPTION OF THE DRAWINGS

The invention is illustrated, although not limited, by the following description of embodiments made with reference to the accompanying drawings in which:
FIGURE 1 shows a top view of a fluid damper according to an embodiment of the present invention when the piston rod is fully extended from the cylinder.
FIGURE 2A is an enlarged view of the open end cylinder portion of the fluid damper of Figure 1.
FIGURE 2B shows a cross-sectional view of Figure 2A along section A-A.
FIGURE 3 is an enlarged view of both flange portions of the guide bushing within the fluid damper of Figure 1.
FIGURE 4 shows a top view of a fluid damper according to the present embodiment when the resilient means is in a fully compressed state.
FIGURE 5A is an enlarged view of the open end cylinder portion of the fluid damper of Figure 4.
FIGURE 5B shows a cross-sectional view of Figure 5A along section A-A.
FIGURE 6 shows an enlarged view of the open end and closed end cylinder portions of the fluid damper of Figure 4.
FIGURE 7A is a perspective view of a disassembled guide bushing of a preferred embodiment of the present invention.
FIGURE 7B is a cross-sectional view of the guide bushing of Figure 7A along section A-A.
FIGURE 8 shows a perspective view of a guide bushing of a preferred embodiment of the present invention with the pieces of the elastic material prior to assembly.
FIGURE 9A shows a perspective view of a disassembled guide bushing of an embodiment of the present invention.
FIGURE 9B is a cross-sectional view of the guide bushing of Figure 9A along section A-A.
FIGURE 10 shows a perspective view of a guide bushing of an embodiment of this invention with the pieces of the elastic material prior to assembly.

### DETAILED DESCRIPTION OF THE EMBODIMENTS

The fluid damper of this embodiment consists of a cylinder 10 having a piston with a piston rod 2, guide bushing 100, 200, valve mechanism 8 and resilient means, such as a spring 9, disposed within the cylinder 10. The unoccupied space within the cylinder 10 is filled with damping fluid that may comprise any fluid of a viscous nature suitable for use in fluid dampers, for example oil.

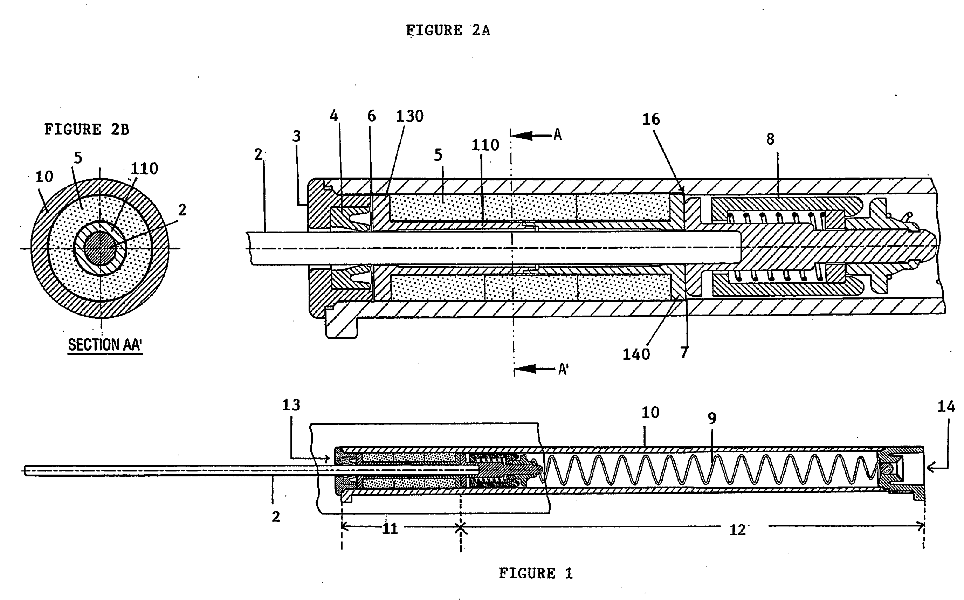

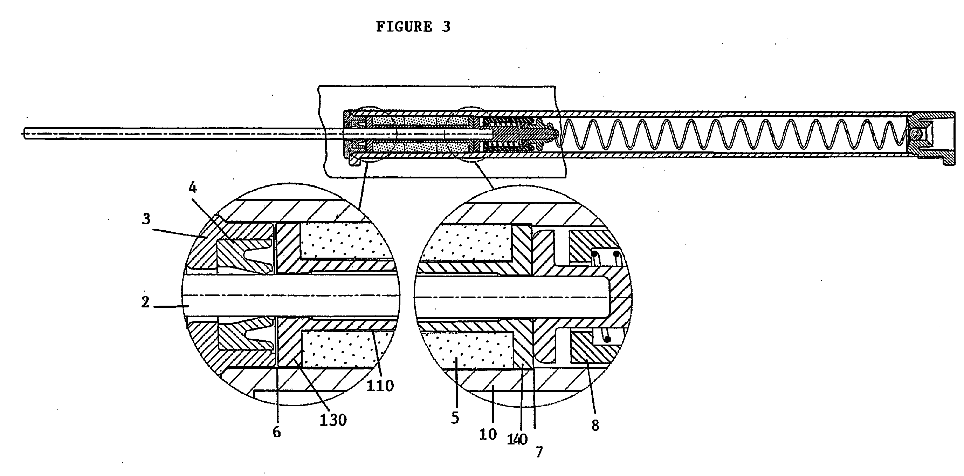

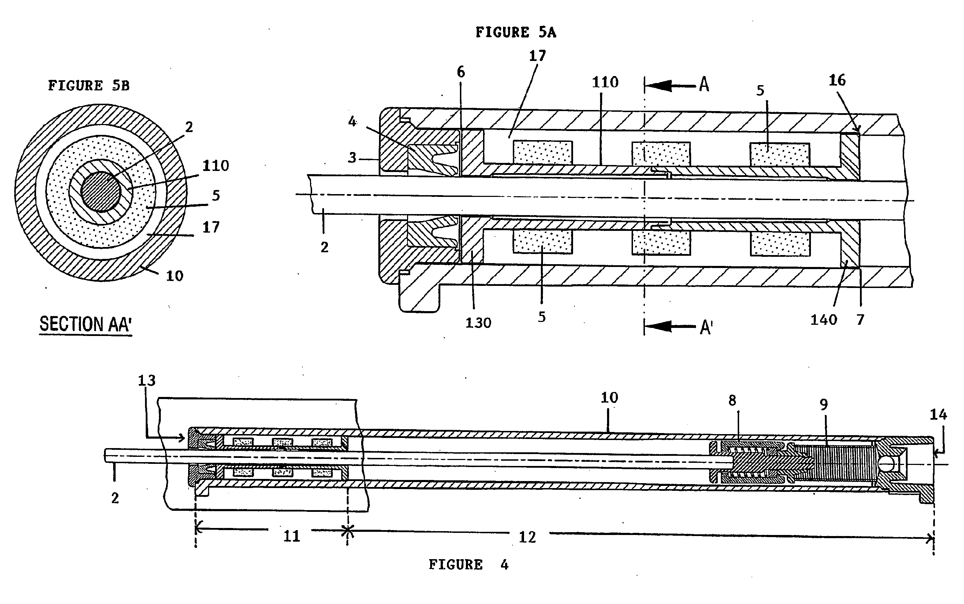

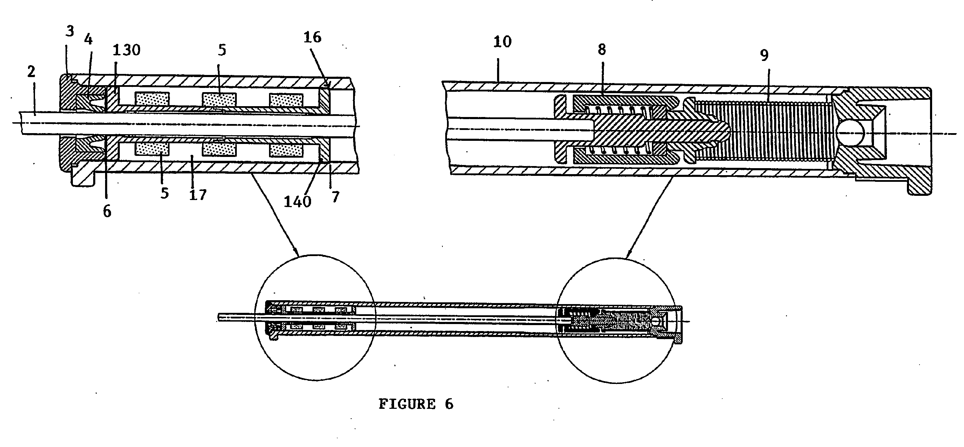

In a preferred embodiment, as seen in Figures 1 to 8, the cylinder 10 has an open end 13 and a closed end 14 with a constricting step 16 provided on the inner cylinder wall such that the open end portion 11 of the cylinder 10 has a larger diameter relative to the closed end portion 12. The cylinder open end 13 is sealed fluid tight with a cover piece 3 having a seal 4. The seal 4 is held between the bottom surface of the cylinder cover piece 3 and a longitudinal end 130, 230 of the guide bushing 100, 200, thus preventing leaking of the damping fluid from the cylinder 10. The guide bushing 100, 200 is located within the larger diameter open end portion 11 of the cylinder 10 whereas the valve mechanism 8 and spring 9 are located within the smaller diameter closed end portion 12 of the cylinder 10.

The piston is moveable between the open end 13 and closed end 14 of the cylinder 10 by way of the piston rod 2 with a portion of the piston rod extending out of the cylinder open end 13 through the cover piece seal 4. The remaining portion of the piston rod 2 within the cylinder 10 consists of a first portion moveably guided within the guide bushing 100, 200 and a second portion mounted with a valve mechanism 8 and connected to the spring 9. The guide bushing 100, 200 prevents the piston rod 2 from tilting as it is either pressed in or drawn out of the cylinder 10. In other words, the movement of the piston rod 2 is guided by the guide bushing 100, 200 to be coaxial to the cylinder 10.

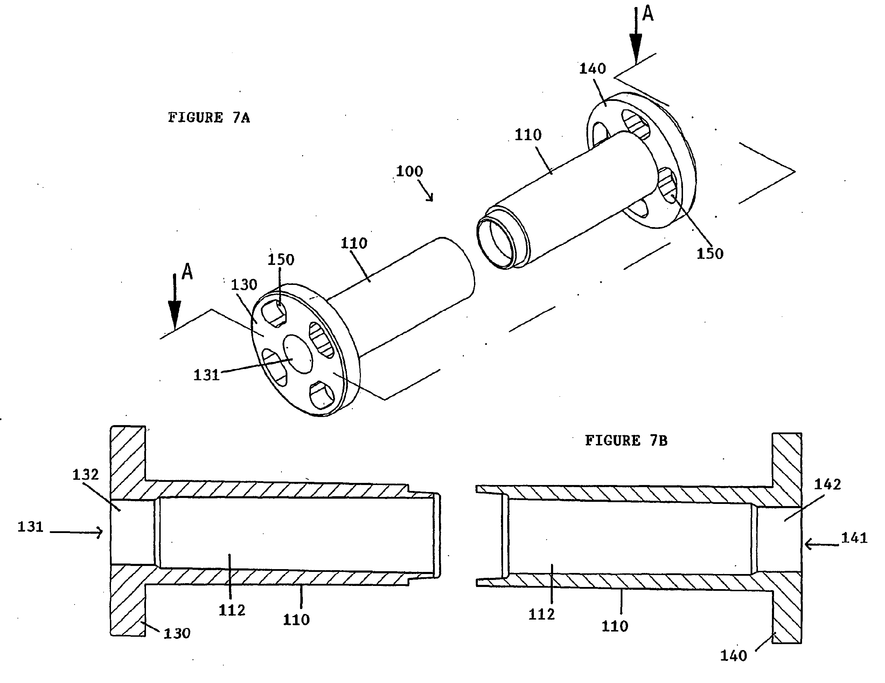

As shown in Figures 7 to 10, the guide bushing 100, 200 is made of a hard material, preferably a hard plastic material and comprises a central hollow shaft 110, 210 having a disc-shaped flange 130, 140, 230, 240 at each longitudinal end. The guide bushing 100, 200 is axially located within the open end portion 11 of the cylinder 10 such that a disc-shaped flange 130, 230 contacts the inner surface of the cylinder cover piece 3 and the other disc-shaped flange 140, 240 contacts the cylinder constricting step 16. In other words, the guide bushing 100, 200 is held stationary within the open end cylinder portion 11 between the cover piece 3 and constricting step 16.

The guide bushing central shaft 110, 210 has a substantially smaller outer diameter than both disc-shaped flanges 130, 140, 230, 240 such that the guide bushing 100, 200 is said to have a "dumb-bell" configuration. The bore 112, 212 of the central shaft 110, 210 extends through its longitudinal section with an opening 131, 141, 231, 241 at each longitudinal end (disc-shaped flanges 130, 140, 230, 240) for receiving the piston rod 2. The diameter of the bore 112, 212 is constricted at each longitudinal end of the central shaft 110, 210 so that the diameter of the bore portion 132, 142, 232, 242 within each disc-shaped flange 130, 140, 230, 240 is relatively smaller. These constricted diameter portions 132, 142, 232, 242 of the central shaft bore 112, 212 within the disc-shaped flanges 130, 140, 230, 240 provide guiding "sleeves" for guiding the movement of the piston rod 2 to be coaxial to the cylinder 10. The diameter of these guiding sleeves is only slightly larger than that of the piston rod 2 such that axial movement of the piston rod 2 is not restricted without compromising the coaxial guiding function of these sleeves. The diameter of the bore portion 112, 212 within the central shaft 110, 210 is significantly larger than that of the piston rod 2 such that no contact is made between the piston rod 2 and the central shaft inner walls.

Each disc-shaped flange 130, 140, 230, 240 extends radially to the inner wall of the cylinder 10 and has a plurality of fluid passages 150, 250 that allows damping fluid to flow from the closed end portion 12 of the cylinder 10 into the space 17 between the central shaft 110, 210 and cylinder inner wall of the open end portion 11, and vice versa. These fluid passages 150, 250 preferably comprise apertures that are evenly distributed about the disc-shaped flange 130, 140, 230, 240. Alternatively or additionally, these fluid passages 150, 250 may comprise openings, such as semi-circular cutouts, about the periphery of the disc-shaped flange 130, 140, 230, 240. For ease of assembly of the guide bushing 100, 200, it is preferable that both disc-shaped flanges 130, 140, 230, 240 are identical, in that both the flanges are provided with fluid passages 150, 250. However, it is also a practical alternative that only one of the disc-shaped flanges has fluid passages 150, 250, namely, the flange 140, 240 located at the longitudinal end of the guide bushing 100, 200 that contact the cylinder constricting step 16.

When the fluid damper is in use, the two guide bushing disc-shaped flanges 130, 140, 230, 240 constitute the sole bearing surfaces 6, 7 for the piston rod 2 within the cylinder 10. The first bearing surface 6 for the piston rod 2 is formed by way of contact between the guide bushing flange 130, 230 and the inner surface of the cylinder cover piece 3 and the adjacent portion of the cylinder inner wall. Contact between the other guide bushing flange 140, 240 and the cylinder constricting step 16 forms the second bearing surface 7 for the piston rod 2. As mentioned above, the guide bushing 100, 200 is held stationary within the cylinder open end portion 11, between the inner surface of the cylinder cover piece 3 and constricting step 16. Thus, both bearing surfaces 6, 7 of the piston rod 2, namely, both disc-shaped flanges 130, 140, 230, 240 of the guide bushing 100, 200, are stationary when the piston rod 2 is in motion (either pressed into or drawn out of cylinder 10). Notably, the moving piston head does not bear against the inner wall surface of the cylinder.

In one embodiment of the invention, as seen in Figures 1 to 6 and 8, highly compressible elastic material 5 is provided within the open end portion 11 of the cylinder 10 and located in the space 17 between the guide bushing central shaft 110, 210 and cylinder inner wall. The elastic material 5 suitably comprises fluid-porous material such as foamed rubber or foamed elastomer plastic. Preferably this elastic material 5 consists of multiple pieces, for example three pieces, that are individually compressible by the damping fluid as the piston moves to the closed end 14 of the cylinder 10. It is also preferred that each of these pieces of elastic material 5 is tubular-shaped and surrounds the central shaft 110, 210. These pieces of elastic material 5 may be aligned axially relative to one another so that adjacent pieces abut one another when in a relaxed state. Alternatively, these multiple pieces of elastic material 5 may comprise individually compressible curved sections that when mounted onto the central shaft 110, 210, these sections form a tubular shape that surrounds the shaft. The elastic material 5 may also comprise a unitary generally tubular element having multiple furrows or grooves that extend longitudinally or circumferentially such that, in cross-section, the elastic material 5 is effectively divided into multiple sectional pieces. This would allow for a larger surface area for compression of the elastic material 5 by the damping fluid. The damping fluid flows within the furrows or grooves to individually compress each sectional piece of the elastic material 5.

The valve mechanism 8 mounted on the second portion of the piston rod 2 (portion of rod within cylinder closed end portion 12) is identical to the valve mechanism disclosed in the applicant's earlier PCT application number PCT/SG2004/000362 (PCT publication number WO 2005/045278 A1) and essentially consists of a disc portion and an annular cover piece that turns about a central axis joining the center of the two when the valve mechanism exceeds certain speed in the fluid-filled cylinder 10. The disc portion extends radially to the inner wall of the cylinder 10 with a surface facing the closed end 14 of the cylinder 10. Part of the circular periphery of the disc portion is removed to allow flow of damping fluid from one side of the disc portion to the other when the disc portion moves along the cylinder 10. Alternatively, the disc portion may be punctuated with openings adjacent the circular periphery of the disc portion to create fluid passages. A hollow shaft for receiving the piston rod 2 and that is integral with the disc portion, extends perpendicularly from the disc surface facing the closed end of the cylinder with the shaft. The piston rod 2 is retained in placed across the valve mechanism 8 with a pair of retaining means with each retaining means rested against the annular cover piece and the disc portion, respectively.

The annular cover piece is used to adjust the area of which the fluid can flow through the disc portion in order to vary the fluid pressure experienced by the valve mechanism 8. The cover piece slips onto the disc portion hollow shaft and is located adjacent to the disc portion. In a first position, the cover piece will cover the entire circular cross section of the cylinder so that there is no fluid passage and the damping fluid is not allowed to flow from one longitudinal end of the valve mechanism 8 to the other and as a result, the valve mechanism 8 will experience maximum fluid pressure. As the annular cover piece begins to rotate in a direction, it slowly uncovers the disc portion openings until it is in a second position in which all the disc portion openings are uncovered and maximum damping fluid flow from one longitudinal end of the valve mechanism 8 to the other is achieved. The outer periphery of the cover piece is partially chamfered to match the pattern of fluid passages on the disc portion formed by removing portions of the disc circular periphery. This provides a path through which the damping fluid in the cylinder bore may flow. Alternatively, when used together with the alternative disc portion where disc portion fluid passages comprise punctuated openings adjacent the circular periphery of the disc, the annular cover piece is provided with a plurality of apertures corresponding to the disc openings.

The rotation of the annular cover piece is effected by an annular turning piece connected to the cover piece by means of withholding claws extending from the cover piece. The turning piece is located between the annular cover piece and the closed end of the cylinder. The outer circular periphery of the turning piece is also partially chamfered so as to form fluid passages that correspond with those of the annular cover piece and disc portion. Alternatively, when used together with the disc portion having punctuated openings about its circular periphery and the annular cover piece having a plurality of apertures corresponding to the disc openings, the turning piece is formed without chamfering.

The turning piece is designed to rotate as it slides along the disc portion hollow shaft. This is accomplished via a guide member on the external surface of the hollow shaft. The guide member is slightly angled with respect to the common axis of rotation of both the annular cover piece and turning piece. The turning piece is also provided with a form of retention mechanism for retaining the turning piece on the guide member and tracing the path of the guide member on the surface of the hollow shaft. The mechanism may be of a variety of forms that either fits or engages slidingly to the guide member without dislodging, and can be integral to the turning piece. For example, if the guide member is a ridge, the corresponding retention mechanism can be a notch having complementary receiving surface which is formed by depressing the inner surface of the turning piece. Alternatively, the guide member can be a groove on the surface of the hollow shaft. Knob extending from the inner surface of the turning piece is able to turn about the hollow shaft as the knob slides along the groove.

A spring coiling around the hollow shaft of the disc portion is placed in between the cover piece and turning piece. When the valve mechanism 8 is stationary, the spring will be fully extended, pushing the turning piece to the furthest end away from the cover piece. As it is held by the claws which extend from the cover piece, the turning piece is prevented from being expelled out of the hollow shaft. A gap exists between the disc portion and the cover piece. However, when the external portion of the piston rod 2 is initially depressed, this gap closes up as the disc portion is pushed forward by the piston rod 2. Subsequently, the whole valve mechanism 8 is propelled towards the closed end 14 of the cylinder 10 through the damping fluid which flows in the opposite direction within the cylinder through the space between the cylinder inner wall and outer periphery of the disc portion and cover piece. Initially at low speed, the spring between the cover piece and turning piece is able to counter the fluid pressure exerted on the turning piece. As the valve mechanism 8 accelerates, because of the viscosity of the damping fluid, the fluid pressure on the turning piece increases. The turning piece inadvertently experiences significant resistance in motion and thus slows down. The rate of rotation of the turning piece being slower than that of the cover piece, the turning piece compresses the spring against the cover piece. As the cover piece moves towards the turning piece, the cover piece rotates together with the turning piece and restricts the openings through which the damping fluid can escape. With less damping fluid flowing through the space between the outer wall of the valve mechanism 8 and the cylinder inner wall, the valve mechanism 8 experiences stronger resistive force to counter the motion of the piston rod 2 until the piston rod slows down to a certain speed. When the piston rod 2 is fully depressed into the cylinder (piston rod is stationary and spring 9 is fully compressed against cylinder closed end 14), the spring between the turning piece and cover piece of the valve mechanism expands causing the turning piece and cover piece to return to their original position in that all the fluid passages of both the turning piece and cover piece are fully opened. However, when the valve mechanism 8 moves away from the cylinder closed end 14, the turning piece remains in its original position. The disc portion is said to be fully opened (with fluid passages minimally covered) and the piston rod 2 is drawn out to its fully extended position from the cylinder 10 with minimum resistance.

The spring 9 is anchored on the cylinder closed end 14 and connected to the assembly of the piston rod 2 and valve mechanism 8 so as to cause the piston rod 2 to be pushed back to its fully extended position when the rod is not pressed into the cylinder 10. Alternatively, the external end of the piston rod 2 may be extended to a moveable part of furniture and the piston rod 2, in that case, extends together with the moveable part of the furniture. This alternative arrangement would negate the need to provide a spring 9 within the cylinder 10 of the fluid damper.

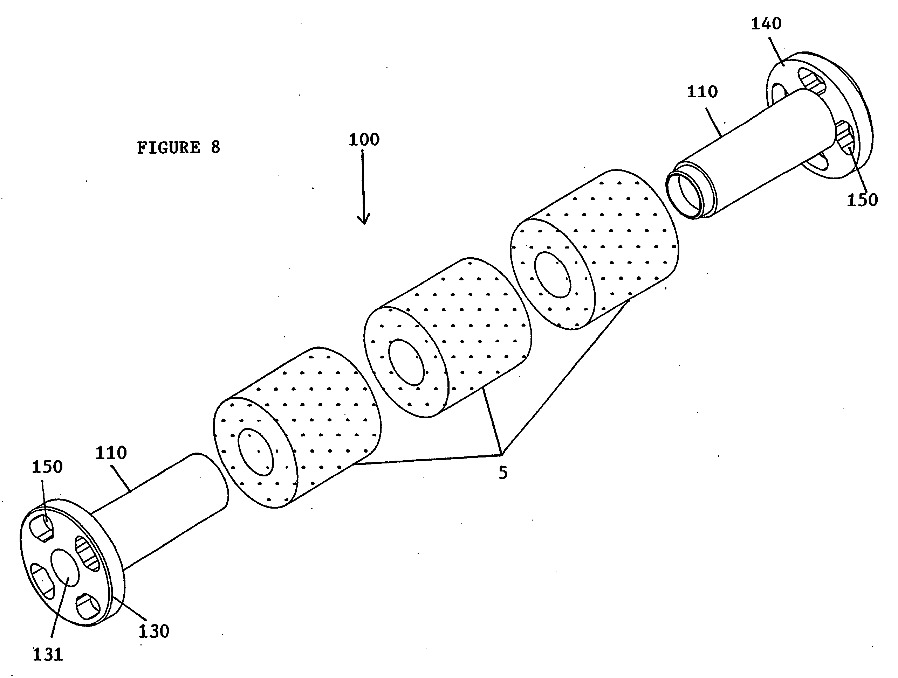

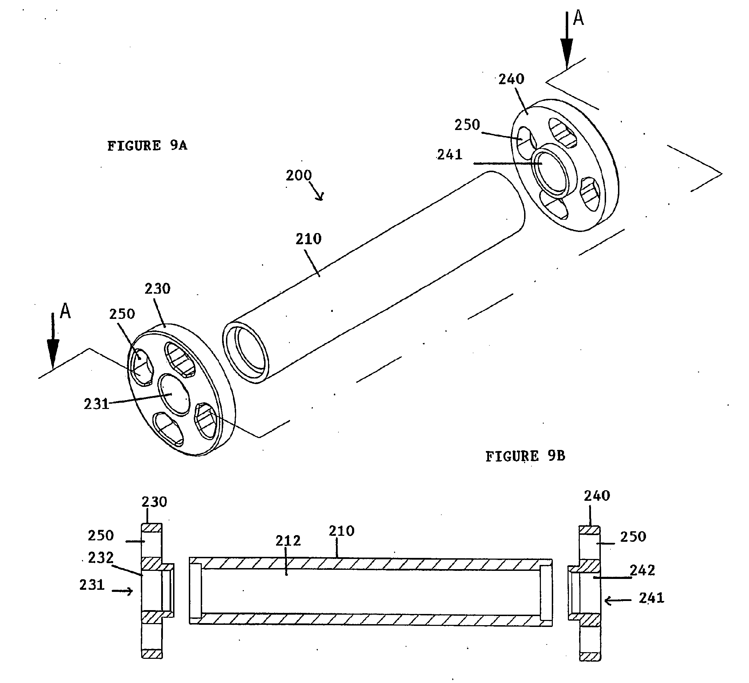

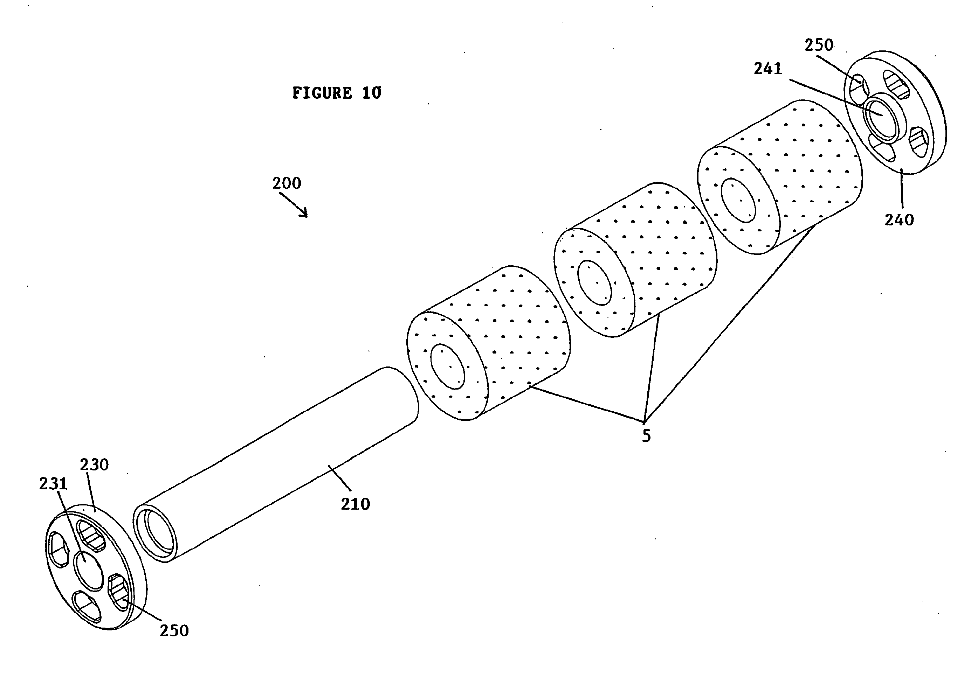

For assembly of the fluid damper, firstly, the cylinder 10 is filled with the required amount of damping fluid. Subsequently, the spring 9 and valve mechanism 8 are inserted into the cylinder 10. For ease of manufacture, as shown in Figures 7 and 8, the guide bushing 100 is assembled from two symmetrical pieces connectable at a mid-point in the central shaft 110 with each piece comprising of a central shaft part with a disc-shaped flange 130, 140. The pieces of preferably tubular elastic material 5 are slipped onto each central shaft part 110 from the end of the shaft that connects to the other shaft part 110. Alternatively, as seen in Figures 9 and 10, the guide bushing 200 may be assembled from three pieces that consist of a single central shaft part 210 connectable at each longitudinal end to a disc-shaped flange 230, 240. In this case, firstly, one of the disc-shaped flanges 230 or 240 is mounted at a longitudinal end of the central shaft 210. Subsequently, the pieces of elastic material 5 are slipped onto the central shaft 210 from the free end of the shaft (longitudinal end of the central shaft that does not yet have a flange mounted thereon). Finally, a disc-shaped flange 230 or 240 is mounted at the free end of the shaft 210. The guide bushing 100, 200 thus surrounded by elastic material 5 is then inserted into the cylinder 10 together with the piston rod 2 and cylinder cover piece 3 with seal 4.

## Claims

1. A fluid damper for use in applications such as furniture, comprising:
a cylinder (10) having an open end (13) and a closed end (14);
a piston disposed within said cylinder (10);
the piston having a piston rod (2) for moving the piston between the open (13) and closed end (14), the piston rod extending out of said open end through a seal (4);
a guide bushing (100, 200) disposed within the cylinder (10);
the guide bushing (100, 200) having a central hollow shaft (110, 210) for guiding the piston rod (2); the guide bushing allowing damping fluid to flow in a space (17) between the shaft and cylinder wall;
a respective flange portion (130, 140, 230, 240) is provided at each longitudinal end of the guide bushing (100, 200), each flange portion extending radially to the cylinder wall; and the two flange portions constitute the sole bearing surfaces for the piston rod (2) within the cylinder (10)
**characterized in that:**
the guide bushing (100, 200) comprises an assembly of two parts that are connectable in the shaft (110, 210).

2. A fluid damper as claimed in claim 1 wherein the guide bushing (100, 200) is fixed in its axial position within the cylinder (10).

3. A fluid damper as claimed in claim 1 or 2 wherein the guide bushing (100, 200) is located toward the open end (13) of the cylinder (10).

4. A fluid damper as claimed in claim 1 or 2 wherein each longitudinal end of the guide bushing (100, 200) comprises a disc-shaped flange portion (130, 140, 230, 240).

5. A fluid damper as claimed in claim 4 wherein each of said flange portions (130, 140, 230, 240) has a plurality of fluid passages (150, 250).

6. A fluid damper as claimed in claim 4 wherein one of said flange portion (140, 240) has a plurality of fluid passages (150, 250).

7. A fluid damper as claimed in claim 5 or 6 wherein the fluid passages (150, 250) comprise apertures that are distributed about the flange portion (130, 140, 230, 240).

8. A fluid damper as claimed in claim 5 or 6 wherein the fluid passages (150, 250) comprise openings about the periphery of the flange portion (130, 140, 230, 240).

9. A fluid damper as claimed in claim 1 wherein elastic material (5) is located in said space (17) between the guide bushing central shaft (110, 210) and the cylinder wall.

10. A fluid damper as claimed in claim 9 wherein said elastic material (5) comprise multiple pieces.

11. A fluid damper as claimed in claim 9 or 10 wherein the elastic material (5) surrounds the guide bushing central shaft (110, 210).

12. A fluid damper as claimed in claim 10 wherein the elastic material (5) comprises multiple pieces that are aligned axially relative to one another in the cylinder (10).

13. A fluid damper as claimed in claim 10 wherein adjacent ones of the elastic material (5) abut one another when in a relaxed state.

14. A fluid damper as claimed in claim 9 wherein the elastic material (5) comprises tubular pieces.

15. A fluid damper as claimed in claim 10 wherein the elastic material (5) comprises three said pieces.

16. A fluid damper as claimed in claim 9 wherein the elastic material (5) comprises fluid-porous material.

17. A fluid damper as claimed in claim 1 wherein a resilient means (9) is provided between the piston and the closed end (14) of the cylinder (10).

18. A fluid damper as claimed in claim 1 wherein the inner wall of the cylinder (10) comprises a constricting step (16) for axially locating the guide bushing (100, 200).

19. A fluid damper as claimed in claim 18 wherein the guide bushing (100, 200) is located such that one longitudinal end (130, 230) of the guide bushing is in contact with said seal (4) and the other longitudinal end (140, 240) is in contact with the constricting step (16).

## Patentansprüche

1. Fluiddämpfer zum Einsatz bei Anwendungen, so wie Möbeln, der aufweist:
einen Zylinder (10) mit einem offenen Ende (13) und einem geschlossenen Ende (14);
einen Kolben, der innerhalb des Zylinders (10) angeordnet ist;
wobei der Kolben eine Kolbenstange (2) zum Bewegen des Kolbens zwischen dem offenen (13) und dem geschlossenen Ende (14) hat, wobei sich die Kolbenstange durch eine Dichtung (4) aus dem offenen Ende erstreckt;
eine Führungsbuchse (100, 200), die innerhalb des Zylinders (10) angeordnet ist;
wobei die Führungsbuchse (100, 200) einen mittigen hohlen Schaft (110, 210) zum Führen der Kolbenstange (2) hat; wobei die Führungsbuchse erlaubt, dass dämpfendes Fluid in einen Raum (17) zwischen dem Schaft und der Zylinderwand strömt;
wobei ein jeweiliger Flanschbereich (130, 140, 230, 240) an jedem Längsende der Führungsbuchse (100, 200) vorgesehen ist, wobei jeder Flanschbereich sich radial zu der Zylinderwand erstreckt und die beiden Flanschbereiche die einzigen Lagerflächen für die Kolbenstange (2) innerhalb des Zylinders (10) bilden;
**dadurch gekennzeichnet, dass:**
die Führungsbuchse (100, 200) eine Anordnung aus zwei Teilen aufweist, die in dem Schaft (110, 210) verbindbar sind.

2. Fluiddämpfer nach Anspruch 1, bei dem die Führungsbuchse (100, 200) in ihrer axialen Position innerhalb des Zylinders (10) festgelegt ist.

3. Fluiddämpfer nach Anspruch 1 oder 2, bei dem die Führungsbuchse (100, 200) auf das offene Ende (13) des Zylinders (10) zu angeordnet ist.

4. Fluiddämpfer nach Anspruch 1 oder 2, bei dem jedes Längsende der Führungsbuchse (100, 200) einen scheibenförmigen Flanschbereich (130, 140, 230, 240) aufweist.

5. Fluiddämpfer nach Anspruch 4, bei dem jeder der Flanschbereiche (130, 140, 230, 240) eine Vielzahl von Fluiddurchlässen (150, 250) hat.

6. Fluiddämpfer nach Anspruch 4, bei dem einer der Flanschbereiche (140, 240) eine Vielzahl von Fluiddurchlässen (150, 250) hat.

7. Fluiddämpfer nach Anspruch 5 oder 6, bei dem die Fluiddurchlässe (150, 250) Öffnungen aufweisen, die um den Flanschbereich (130, 140, 230, 240) verteilt sind.

8. Fluiddämpfer nach Anspruch 5 oder 6, bei dem die Fluiddurchlässe (150, 250) Öffnungen um den Umfangsbereich des Flanschbereiches (130, 140, 230, 240) aufweisen.

9. Fluiddämpfer nach Anspruch 1, bei dem sich elastisches Material (5) in dem Raum (17) zwischen dem mittigen Schaft (110, 210) der Führungsbuchse und der Zylinderwand befindet.

10. Fluiddämpfer nach Anspruch 9, bei dem das elastische Material (5) mehrere Stücke aufweist.

11. Fluiddämpfer nach Anspruch 9 oder 10, bei dem das elastische Material (5) den mittigen Schaft (110, 210) der Führungsbuchse umgibt.

12. Fluiddämpfer nach Anspruch 10, bei dem das elastische Material (5) mehrere Stücke aufweist, die axial in Bezug aufeinander in dem Zylinder (10) ausgerichtet sind.

13. Fluiddämpfer nach Anspruch 10, bei dem benachbarte Stücke des elastischen Materials (5) aneinander anliegen, wenn sie in einem entspannten Zustand sind.

14. Fluiddämpfer nach Anspruch 9, bei dem das elastische Material (5) rohrförmige Stücke aufweist.

15. Fluiddämpfer nach Anspruch 10, bei dem das elastische Material (5) drei der Stücke aufweist.

16. Fluiddämpfer nach Anspruch 9, bei dem das elastische Material (5) fluidporöses Material aufweist.

17. Fluiddämpfer nach Anspruch 1, bei dem ein federndes Mittel (9) zwischen dem Kolben und dem geschlossenen Ende (14) des Zylinders (10) vorgesehen ist.

18. Fluiddämpfer nach Anspruch 1, bei dem die Innenwand des Zylinders (10) eine einengende Stufe (16) zum axialen Positionieren der Führungsbuchse (100, 200) aufweist.

19. Fluiddämpfer nach Anspruch 18, bei dem die Führungsbuchse (100, 200) so angeordnet ist, dass ein Längsende (130, 230) der Führungsbuchse in Kontakt mit der Dichtung (4) ist und das andere Längsende (140, 240) im Kontakt mit der einengenden Stufe (16) ist.

## Revendications

1. Amortisseur à fluide pour une utilisation dans des applications telles que des meubles, comportant :
un cylindre (10) ayant une extrémité ouverte (13) et une extrémité fermée (14),
un piston disposé à l'intérieur dudit cylindre (10),
le piston ayant une tige de piston (2) pour déplacer le piston entre les extrémités ouverte (13) et fermée (14), la tige de piston s'étendant à l'extérieur de ladite extrémité ouverte à travers un joint (4),
une douille de guidage (100, 200) disposée à l'intérieur du cylindre (10),
la douille de guidage (100, 200) ayant un arbre central creux (110, 210) pour guider la tige de piston (2), la douille de guidage permettant à du fluide d'amortissement de s'écouler dans un espace (17) entre l'arbre et une paroi de cylindre,
une partie de bride respective (130, 140, 230, 240) est agencée à chaque extrémité longitudinale de la douille de guidage (100, 200), chaque partie de bride s'étendant radialement jusqu'à la paroi de cylindre, et les deux parties de bride constituent les seules surfaces d'appui pour la tige de piston (2) à l'intérieur du cylindre (10)
**caractérisé en ce que :**
la douille de guidage (100, 200) comporte un assemblage de deux parties qui peuvent être raccordées dans l'arbre (110, 210).

2. Amortisseur à fluide tel que revendiqué dans la revendication 1, dans lequel la douille de guidage (100, 200) est fixée dans sa position axiale à l'intérieur du cylindre (10).

3. Amortisseur à fluide tel que revendiqué dans la revendication 1 ou 2, dans lequel la douille de guidage (100, 200) est située vers l'extrémité ouverte (13) du cylindre (10).

4. Amortisseur à fluide tel que revendiqué dans la revendication 1 ou 2, dans lequel chaque extrémité longitudinale de la douille de guidage (100, 200) comporte une partie de bride en forme de disque (130, 140, 230, 240).

5. Amortisseur à fluide tel que revendiqué dans la revendication 4, dans lequel chacune desdites parties de bride (130, 140, 230, 240) a une pluralité de passages de fluide (150, 250).

6. Amortisseur à fluide tel que revendiqué dans la revendication 4, dans lequel l'une desdites parties de bride (140, 240) a une pluralité de passages de fluide (150, 250).

7. Amortisseur à fluide tel que revendiqué dans la revendication 5 ou 6, dans lequel les passages de fluide (150, 250) comportent des ouvertures qui sont réparties autour de la partie de bride (130, 140, 230, 240).

8. Amortisseur à fluide tel que revendiqué dans la revendication 5 ou 6, dans lequel les passages de fluide (150, 250) comportent des orifices autour de la périphérie de la partie de bride (130, 140, 230, 240).

9. Amortisseur à fluide tel que revendiqué dans la revendication 1, dans lequel un matériau élastique (5) est positionné dans ledit espace (17) entre l'arbre central de douille de guidage (110, 210) et la paroi de cylindre.

10. Amortisseur à fluide tel que revendiqué dans la revendication 9, dans lequel ledit matériau élastique (5) comporte de multiples pièces.

11. Amortisseur à fluide tel que revendiqué dans la revendication 9 ou 10, dans lequel le matériau élastique (5) entoure l'arbre central de douille de guidage (110, 210).

12. Amortisseur à fluide tel que revendiqué dans la revendication 10, dans lequel le matériau élastique (5) comporte de multiples pièces qui sont alignées axialement les unes par rapport aux autres dans le cylindre (10).

13. Amortisseur à fluide tel que revendiqué dans la revendication 10, dans lequel des pièces adjacentes du matériau élastique (5) viennent en butée les unes contre les autres lorsqu'elles sont dans un état détendu.

14. Amortisseur à fluide tel que revendiqué dans la revendication 9, dans lequel le matériau élastique (5) comporte des pièces tubulaires.

15. Amortisseur à fluide tel que revendiqué dans la revendication 10, dans lequel le matériau élastique (5) comporte trois dites pièces.

16. Amortisseur à fluide tel que revendiqué dans la revendication 9, dans lequel le matériau élastique (5) comporte un matériau poreux aux fluides.

17. Amortisseur à fluide tel que revendiqué dans la revendication 1, dans lequel des moyens souples (9) sont agencés entre le piston et l'extrémité fermée (14) du cylindre (10).

18. Amortisseur à fluide tel que revendiqué dans la revendication 1, dans lequel la paroi intérieure du cylindre (10) comporte un gradin d'étranglement (16) pour positionner axialement la douille de guidage (100, 200).

19. Amortisseur à fluide tel que revendiqué dans la revendication 18, dans lequel la douille de guidage (100, 200) est positionnée de telle sorte qu'une extrémité longitudinale (130, 230) de la douille de guidage est en contact avec ledit joint (4) et l'autre extrémité longitudinale (140, 240) est en contact avec le gradin d'étranglement (16).
